# EUROPEAN PATENT SPECIFICATION

(11) **EP 4 443 810 B1**
(45) Date of publication and mention of the grant of the patent: **10.09.2025**
(21) Application number: 23305495.6
(22) Date of filing: 05.04.2023
(51) Int. Cl.: H04L 9/00, G06F 11/34

(54) **SYSTEM, METHOD AND COMPUTER PROGRAM PRODUCT FOR DETECTING BYZANTINE NODES IN A CONSENSUS-BASED DISTRIBUTED SYSTEM**
SYSTEM, VERFAHREN UND COMPUTERPROGRAMMPRODUKT ZUR ERKENNUNG VON BYZANTINISCHEN KNOTEN IN EINEM KONSENSBASIERTEN VERTEILTEN SYSTEM
SYSTÈME, PROCÉDÉ ET PRODUIT DE PROGRAMME INFORMATIQUE POUR DÉTECTER DES NOEUDS BYZANTINS DANS UN SYSTÈME DISTRIBUÉ BASÉ SUR UN CONSENSUS

(43) Date of publication of application: 09.10.2024
(73) Proprietor: Commissariat à l'Energie Atomique et aux Energies Alternatives, 75015 Paris (FR)
(72) Inventor: SALMONS, Stéphane, 91191 GIF-SUR-YVETTE Cedex (FR); MAHÉ, Erwan, 91191 GIF-SUR-YVETTE Cedex (FR); AMOUSSOU-GUENOU, Yackolley, 91191 GIF-SUR-YVETTE Cedex (FR); DEL POZZO, Antonella, 91191 GIF-SUR-YVETTE Cedex (FR); GASTON, Christophe, 91191 GIF-SUR-YVETTE Cedex (FR); LAPITRE, Arnault, 91191 GIF-SUR-YVETTE Cedex (FR)
(74) Representative: Atout PI Laplace

(56) References cited:
- US-A1- 2022 337 602
- ALEX SHAMIS ET AL: "IA-CCF: Individual Accountability for Permissioned Ledgers", ARXIV.ORG, CORNELL UNIVERSITY LIBRARY, 201 OLIN LIBRARY CORNELL UNIVERSITY ITHACA, NY 14853, 8 March 2022 (2022-03-08), XP091169677

## Description

### Field of the Invention

The present invention relates to the field of software engineering, particularly to the field of Byzantine Fault Tolerant algorithms in consensus-based distributed systems.

### Background Art

In an increasingly growing, globalised and open digital world, consensus-based distributed systems are becoming more and more fashionable as they allow a set of non-localised actors (participants, parties, entities ... ) to reach various kinds of agreement without relying on any central authority. These agreements are generally embodied by the consistency of data or transactions across all local versions of a distributed registry, or ledger, of which each actor has a copy. To reach agreement, i.e. coherence of the distributed registry, Distributed Ledger Technologies (DLT) may rely on consensus algorithms of various kinds. It is particularly true for blockchain systems which require a consensus on new blocks to be added to the chain.

The problem of consensus in a distributed system is crucial because actors are owned by different parties which may have distinct and contradictory goals and incentives. Additionally, even if DLT actors are assumed to respect the same specification (i.e. the consensus protocol) they can be implemented differently by various parties. Those implementations may be faulty or may be intertwined with applicative code. Moreover, the information on the implementations in use may not be publicly available.

There exist several consensus algorithms or protocols to solve the consensus problem. A most famous although trivial consensus algorithm is the "Bitcoin Protocol". In this particular case, consensus is made on a leader actor which chooses the block and is not made on the block itself. The election of the leader is intended to be fair because it relies on being the first to solve a complex problem which solution should have equal chances of being found by all participants and which cannot be computed in advance. Solving such a problem requires work, which is at the core of "Proof of Work" (PoW) blockchains, justifying the reward of the leader, but unfortunately, having a high energetic cost.

To avoid the computational cost of proof-of-work schemes, "Proof of Stake" (PoS) protocols which are a class of consensus mechanisms for blockchains, use complex consensus algorithms based on the exchange of messages for the selection of new blocks to add to the blockchain. Such algorithms generally consist in phases of propositions and votes. Actors may provide a stake in order to participate in the consensus and may be rewarded accordingly. Such PoS blockchains are promising, notably for their energetic sobriety.

Depending on the properties they can guarantee, consensus algorithms can be said to be:
- "Crash-Fault Tolerant" (CFT) if they allow consensus to be reached despite the presence of a certain number of actors who no longer participate in the consensus after a certain time, due for example, to a crash of their computing resources or a failure of the communication network.
- "Byzantine Fault Tolerant" (BFT) if they guarantee that consensus may be eventually reached despite the presence of a number of Byzantine actors. A Byzantine actor is an actor whose behavior deviates in an arbitrary and unpredictable way from its specification (i.e. what the algorithm requires the actor to do), either due to complex multifactorial failures or intentional malice.

BFT algorithms guarantee to reach consensus only if the number of Byzantine actors remains below a certain threshold. The maximum number of Byzantine actors generally corresponds to a threshold percentage (generally 1/3).

However, BFT consensus algorithms include no systematic approach for the detection of Byzantine actors. Hence, in practice, not exceeding the threshold is not a proven fact but only a hypothesis for the correct functioning of the algorithms.

To ensure that this hypothesis is always fulfilled, it is necessary to be able to identify and count the Byzantine actors. But a Byzantine actor is difficult to identify, as it may behave in accordance with what is expected of him one moment, act in a faulty or malicious manner the next, and then resume compliant behavior.

Moreover, the identification of Byzantine actors must not be questionable and shall be accompanied by evidences.

Individual accountability in the literature is mainly tied to its application in the context of blockchain systems. The following references list a state of the art on individual accountability which is mainly applied to blockchain systems and consensus algorithms.

In the reference [1] from P. Civit, S. Gilbert and V. Gramoli, "Polygraph: Accountable Byzantine Agreement", 2021 IEEE 41st International Conference on Distributed Computing Systems (ICDCS), 2021, pp.403-13, the authors propose an accountable consensus algorithm. In this work, accountable consensus means that either the protocol reaches consensus or it does not and, in this case only, Byzantine actors can be held accountable. More precisely, when a disagreement occurs, each correct actor should be able to detect at least t+1 faulty actors, where t<n/3 is the limit number of tolerable faults, where 'n' being the total number of actors. In their algorithm, all consensus messages contain the necessary information to have accountability in case of disagreement. This way, when a disagreement occurs, each actor can compile the messages received to know who misbehaved. The limitations of the solution of reference [1] are that the Byzantine actors can be identified only if consensus is not reached, and that the approach requires specifically designed or adapted consensus algorithms.

In the reference [2] from A. Shamis, P. Pietzuch, B. Canakci, M. Castro, C. Fournet, E. Ashton, A. Chamayou, S. Clebsch, A. Delignat-Lavaud, M. Kerner, J. Maffre, O. Vrousgou, C. M. Wintersteiger, M. Costa and M. Russinovich, "IA-CCF: Individual Accountability for Permissioned Ledgers" 19th USENIX Symposium on Networked Systems Design and Implementation (NSDI 22) April 2022, the authors propose an extension of "Confidential Consortium Framework" (CCF) for individual accountability. The method described can be used to blame individual actors even in the case where all actors misbehave. This is done as part of an audit performed by an unspecified auditing authority. In this approach, each transaction request is signed and appended to the ledger. Auditing is then based on an analysis of transaction receipts collected by clients which transactions are confirmed and the content of the ledger, where one can then find whether an actor has signed contradictory transactions. The limitations of the solution of reference [2] are that the method relies on CCF, which must run on specific hardware, and that the method is not extensible to more generic consensus algorithms.

In the reference [3] from A. Haeberlen, P. Kouznetsov and P. Druschel, "PeerReview: practical accountability for distributed systems" SIGOPS Oper. Syst. Rev. 41, 6 (December 2007), pp. 175-188. doi:10.1145/1323293.1294279, the authors describe a method for providing accountability in distributed systems. It relies on having a per-actor secure log that records all messages sent and received to and by every other actor, which all are cryptographically authenticated. Whenever an actor sends a message to another actor, a series of acknowledgements are performed so that the emitter can certify it has indeed sent the message to its target and the receiver can certify it has indeed received the message from the emitter. That information, which is cryptographically signed by both parties, is entered into a secure and tempered-proof log. The log itself, existing on a specific actor, is periodically checked by a set of other actors called witnesses. The witnesses can check the consistency of each log entry w.r.t. the previous ones and make sure that the target actor does not keep several logs or branching logs to avoid detection. The limitations of the solution of reference [3] are that the method requires to operate a set of specific witnesses actors, that the method can only be applied to actors which behavior can be represented by a deterministic automaton, and that the method requires to replay each actor's log on a copy of its implementation. The last two limitations are explained by the fact that during audit, each actor's log is replayed on a copy of its implementation so as to verify that it followed its intended behavior. In order to ensure that from a unique set of inputs there can only be a unique set of outputs, this local implementation or specification must be deterministic. The analysis that is thus performed is local and does not check the coherence between messages received by a certain actor and send by another (this verification is rather ensured by the logging mechanism itself).

In view of the aforementioned drawbacks, there is a need for an improved solution, solving the drawbacks of the existing methods, for the determination and the identification of Byzantine actors in a consensus-based distributed system.

The present invention offers a solution to this need.

US 2022/337602 A1 is further prior art.

### Summary of the invention

The present invention offers a model-based method that complements BFT consensus algorithms with an individual accountability process that allows identifying Byzantine actors and providing evidence of the byzantine behavior of a particular actor, thereby allowing this latter to be held individually accountable for his behavior.

A first object of the present invention is to address the concern that BFT consensus algorithms work as expected only when the proportion of Byzantine actors does not exceed a certain threshold (typically 1/3). In order to ensure this threshold is not exceeded during the whole execution of the algorithm in the distributed system, it is necessary to identify who are the Byzantine actors in order to be able to count them. This is a necessary condition to have full confidence in the consensus resulting from the execution of the algorithm.

Another object of the present invention is to address the concern that the operators and actors of a DLT may want to reduce the number of Byzantine actors and to do so may implement a reward/punishment policy capable of blaming individual actors for not following commonly agreed rules. Such blaming rules foster the smooth operation of the overall system. Moreover, incentivizing actors to follow the rules promotes compliance with the threshold condition. The implementation of such a policy requires first identifying which actors have behaved in a Byzantine manner at a moment or another, and requires then providing evidence of their misbehaviors.

Advantageously, the method of the present invention relies on a generic model-based approach applicable to all kind of distributed systems reaching agreement using consensus algorithms. The method of the present invention may be useful to blockchain systems but more generally to any distributed system. Advantageously, the invention does not need the consensus algorithm to be modified in any way nor to be specifically hardware designed.

The approach of the present invention allows extending the traditional Runtime Verification technique to consensus-based distributed-systems with a dedicated recovery mechanism which tackles the problem of identifying more than one Byzantine actor at a time.

Additionally, as the method is based on formal behavioral models, it can be used at different levels of abstractions to verify different aspects of the communications that may occur within a distributed system. For instance, if within a distributed system, there is a consensus layer which is intertwined with an application layer, the proposed approach allows having two distinct global models and two distinct analyses to find different Byzantine actors independently according to those two layers.

Furthermore, the method of the present invention being model-based allows increasing reusability and adaptability. For instance, different distributed systems may use the same consensus algorithm and it becomes easy to adapt the formal behavioral model to different numbers of actors, different policies and different architectures of communication.

Generally, the method of the present invention does not focus on auditing a blockchain's content or on logging mechanisms; however it requires having trustworthy logs for each actor of the distributed system, with this task being assumed to be delegated to an external monitoring infrastructure.

Starting from the hypothesis of having such trustworthy logs, particularly trustworthy trace logs, wherein a trace corresponds to a sequence of emission events (i.e. output messages) and reception events (i.e. incoming messages), the present invention proposes a generic approach to analyse the logs against a global behavioral model so as to infer a set of Byzantine actors.

In summary, the innovative features of the present invention are that:
- It relies on a formal behavioral modelling approach of a consensus algorithm in order to assess individual accountability for consensus-based distributed systems. It does not require a dedicated consensus algorithm and it applies as is to a wide range of BFT consensus algorithms (this range depending on the expressiveness of the language used to model the algorithm).
- It allows for the detection of more than only one Byzantine actor, thanks to the innovative recovery mechanism complementing a traditional Runtime Verification technique.
- It allows determining exactly when the behavior of an actor deviates from the execution of the consensus algorithm, and it provides the proof of this deviation, thanks to the innovative multi-trace analysis mechanism complementing the traditional Runtime Verification technique.
- The whole method is hardware agnostic and does not require any dedicated material.
- The whole method can be applied at different levels of abstraction (i.e. different levels of protocol stack up to the application level).

The present invention will find advantageous applications for any designer or operator of BFT consensus-based distributed systems faced to the aforementioned concerns.

Among the applications, it may be cited designers or operators of PoS Blockchains willing to achieve a high-level of system robustness by using Byzantine Fault Tolerant algorithm to their best.

Further, the invention may be of interest for anyone involved in the development and operation of the known Tendermint^{®} Blockchain protocol (e.g. Informal Systems), and for all players involved in the development and operation of Distributed Ledger Technologies.

The present invention provides a solution to detect any deviation from the validity domain of a BFT algorithm, meaning exceeding the threshold of the number of Byzantine actors (solving thereby the first concern).

Additionally, the present invention opens up the possibility of implementing a reward & punishment policy (thereby solving the second concern), which can constitute an incentive for actors to behave properly well, and further enabling the correct functioning of the system.

Another interesting feature of implementing the present invention is that it may have a positive societal and environmental impact, by promoting the use of PoS blockchains. In fact, the existing PoW blockchains, such as Bitcoin, rely on the resolution of complex mathematical problems to achieve a consensus about a next block. This work is extremely resource consuming and its environmental impact is huge and still growing. By contrast, most PoS blockchains make use of a consensus algorithm for the selection of a new block, which requires computing resources of several orders of magnitude lower than for PoW blockchains.

Then by implementing and deploying individual accountability on PoS BFT blockchains, the present invention would improve their usability and the trust of the various actors that participate, thus favoring their adoption. It may significantly contribute to the general transition from PoW blockchains to PoS blockchains thereby contributing to the reduction of the carbon footprint of blockchain systems.

Another advantage relies on the fact that the method of the present invention may be extended to cope with any kind of algorithms between actors of a distributed system, i.e. not just with consensus algorithm.

To achieve the foregoing objects, a system, method and computer program product are provided in the appended claims.

Specifically, a computer implemented method is provided for detecting Byzantine nodes in a consensus-based distributed system is disclosed. The distributed system is composed of a plurality of nodes wherein agreement between nodes are reached by a Byzantine Fault Tolerant (BFT) consensus algorithm, each node being defined by at least a local distributed registry configured to collect in a local trace log file all inputs and outputs of local transactions occurring at the respective node during an execution of the distributed system. The method comprises the steps of: - receiving a multi-trace log file comprising all local trace log files collected during an execution period of the distributed system; - executing an offline runtime verification algorithm on the multi-trace log file with a formal behavioral model, the formal behavioral model being a representation of the BFT consensus algorithm in a formal language, and being composed of a plurality of local models, each local model defining at least a local behavioral specification representing an expected behavior of one node of the plurality of nodes of the distributed system. The runtime verification algorithm comprises when a deviation from an expected behavior is detected, the steps of: - replacing a local model generating the detected deviation by a local Byzantine model, wherein the local Byzantine model allowing the detected deviation to occur; pursuing the execution of the runtime verification algorithm; and -repeating the replacing and pursuing steps until the whole multi-trace log file is analyzed. The method allows creating a list of all local models replaced by a local Byzantine model during the execution of the runtime verification algorithm, the list thereby identifying the corresponding nodes of the distributed system as being Byzantine nodes.

The invention further addresses a system comprising means adapted to carry out the steps of the method according to any one of method claims.

A system comprising blockchain architecture of distributed ledgers for implementing the method is also provided.

Another object is a computer program comprising instructions for carrying out the steps of the method according to any one of method claims when said computer program is executed on a suitable computer device.

Further aspects of the invention will now be described, by way of preferred implementation and examples, with reference to the accompanying figures.

### Brief description of the drawings

The above and other items, features and advantages of the invention will be better understood by reading the following more particular description of the invention in conjunction with the figures wherein:
Fig. 1 shows an example of a distributed system environment for which the present invention may be applied;
Fig. 2 is a block diagram of the main components involved in operating the system of the present invention in an embodiment;
Fig. 3 is a flow chart of the general process for identifying Byzantine nodes within a distributed system, in accordance with an embodiment of the present invention;
Fig. 4 is a flow chart of the runtime verification process in accordance with an embodiment of the present invention; and
Fig. 5a to Fig. 5c show an exemplary operating of the accountability mechanism, in accordance with an embodiment of the present invention.

### Detailed description of the invention

Some definitions of terms and expressions used in the description and the figures are listed below.
(A) One can found from the article of E. Mahé, B. Bannour, C. Gaston, A. Lapitre, P. Le Gall, "A small-step approach to multi-trace checking against interactions". p. 1815-1822. SAC'21, Association for Computing Machinery, New York, NY, USA (2021, that:
   - Executions of systems are characterized by sequences of events called communication actions (actions for short) which are of two kinds: either the emission of a message denoted by l!m (m ∈ M from a lifeline l ∈ L), or the reception of a message denoted by I?m (m ∈ M by a lifeline l ∈ L).
   - Sequences of actions are called traces. For any two traces t1 and t2, t1.t2 is the trace composed of the sequence of actions of t1 followed by the sequence of actions of t2.
   - Interactions can be drawn as "sequence diagrams" of which an example is given in the left in Annex A. Lifelines are drawn as vertical lines. Emission and reception actions are drawn as horizontal arrows carrying the transmitted message and which respectively exit the emitting lifeline or point towards the receiving lifeline. The arrow carrying m1 and specifying its passing between I1 and I3 is modelled by the interaction strict(I1!m1, I3?m1).
(B) Further, one can found from the article of E. Mahé, C. Gaston, P. Le Gall, "Equivalence of denotational and operational semantics for interaction languages", Theoretical Aspects of Software Engineering. pp. 113-130, Springer International Publishing, Cham (2022), that:
   - Message Sequence Charts (MSC) and Sequence Diagrams (SD) are graphical models representing the behaviors of distributed and concurrent systems via the scheduling of discrete emission and reception events. So as to exploit them in formal methods, a mathematical semantics is required. In the literature, different kinds of semantics are proposed: denotational semantics (well suited to reason about algebraic properties) and operational semantics (well suited to establish verification algorithms). An algebraic language is defined to specify so-called interactions, similar to the MSC and SD models. It is equipped with a denotational semantics associating sets of traces (sequences of observed events) to interactions. Then a structural operational semantics is defined in the style of process algebras and prove the equivalence of the two semantics.
(C) Runtime Verification (RV) as generally known is a computing system analysis and execution approach based on extracting information from a running system and using it to detect and possibly react to observed behaviors satisfying or violating certain properties.
(D) A node is a computational device executing an algorithm. Other synonyms include "machine", "processor", "party", "player", actor. An algorithm has the same meaning as "program".
(E) A distributed environment is a system including multiple machines or nodes running algorithms, interacting with each other and potentially other components.
(F) An execution or a run is a description of the evolution of a distributed system for a fixed set of inputs. An execution model is the mathematical formalism used to make that description.

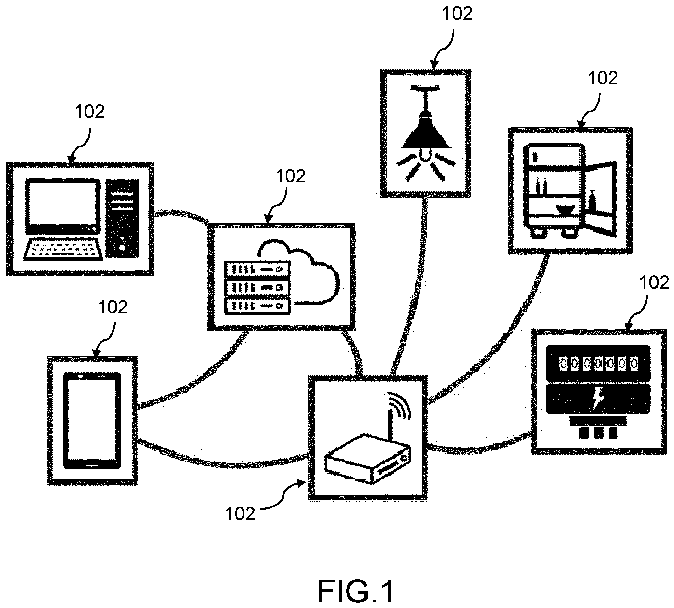

Going first to FIG. 1, an illustrative distributed computing system 100 comprises a network of a plurality n of nodes 102 which are assumed to adhere to a given Byzantine Fault Tolerant (BFT) consensus algorithm.

The Byzantine Fault Tolerant consensus algorithm guarantees that consensus between actors (i.e. nodes of the distributed system) may be eventually reached despite the presence of a number of Byzantine actors, i.e. an actor whose behavior deviates in an arbitrary and unpredictable way from its specification either due to complex multifactorial failures or intentional malice.

It is to noted that the number n of nodes is not necessarily constant, since the configuration of the system can be dynamically changed, while n is typically assumed to be equal to or larger than four, i.e. n≥4. In practice, the distributed system 100 is typically configured to tolerate at most f Byzantine nodes, where f<n/3. That is, at most f nodes in the network 100 can be Byzantine such that n≥3f+1.

A distributed system such as 100 generally refers to a cloud computing environment with one or more cloud communicating computing nodes enabling local computing smart devices 102 used by cloud consumers, such as, for example, personal digital assistant (PDA) or cellular telephone, desktop computer, laptop computer, as lighting fixtures, thermostats, home security systems, cameras, and other home appliances. The nodes may be grouped (not shown) physically or virtually, in one or more networks, such as Private, Community, Public, or Hybrid clouds or a combination thereof. This allows cloud computing environment 100 to offer infrastructure, platforms and/or software as services for which a cloud consumer does not need to maintain resources on a local computing device.

The distributed system may be a blockchain system, based on blockchain architecture of distributed ledgers.

Each node of the distributed system 100 is defined by at least a local copy of a distributed registry (i.e. distributed ledgers in case of a blockchain system) configured to collect in a local trace log file all inputs and outputs of local transactions occurring at the respective node during an execution of the distributed system.

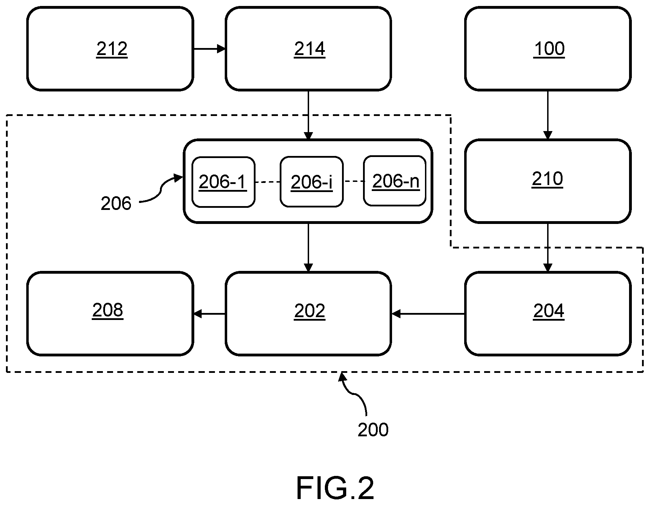

FIG. 2 shows a block diagram of the main components of the system 200 of the present invention in an embodiment, which mainly comprises a core analyzing module 202 coupled to a storage module 204 for storing multi-traces log files of one or several distributed systems, to a behavioral model 206 for specifying a consensus algorithm, and coupled to an output module 208 for providing the result of the analysis.

It is to be appreciated that during an execution of a distributed system, such as distributed system 100, messages are exchanged between actors of the system. For each actor, a local trace corresponding to a sequence of emission events (i.e. output messages) and reception events (i.e. incoming messages) can be observed, by a local observation entity, at an actor's communication interface. Any actor can then be monitored so as to be able to collect this local trace in the form of a log.

Preferably, the monitor should be a secure entity for guarantying the collected log be faithful to the local trace that effectively occurred, and that it cannot be corrupted (e.g. by the actor that is monitored). This allows providing a tamper-proof log.

So, during a given execution of an overall distributed system, all local observers produce a corresponding local trace log file. At the end of the execution, an external actor, i.e. not an actor of the distributed system, for instance an auditing authority, may collect the local trace log files.

The way by which the local traces are collected (whether this concerns the nature of the local observers, how they are deployed or how they communicate what they observe to the auditing authority) is not to be specified herein.

However, one has to consider the ability to collect a faithful multi-trace as a prerequisite for operating the analysing method of the present invention. This prerequisite corresponds to a number of hypotheses which are strong but quite common whenever accountability is involved, particularly in blockchains architectures. Those hypotheses are the following:
- Every actor (i.e. every node) of a distributed system is equipped with a local observer (i.e. a local observation module) configured to faithfully log all communication actions (in-events and out-events) that occurs on its interface of communication.
- The start time and the end time of an observation duration in all local observers are synchronized and allow all communication actions to be observed (i.e. there are no unobserved actions).
- The distributed system is composed of a finite number of actors and is closed, i.e. any given actor can only receive messages from other known actors of the system.
- Messages are cryptographically signed, i.e. the original emitter of any message can be unambiguously identified via the content of the message itself.

In an implementation, a central module 210 collects the local trace log files of all actors of a distributed system 100, after or during the execution of the system. The secure monitoring architecture that is required to collect the local traces can be implemented in several manners. It does not necessarily require a central authority, and it can be implemented using cryptographic techniques and overheads on communications. At the end of a given execution of a distributed system, a set of all local trace log files is available as a multi-trace log file.

The multi-trace log file may then be transmitted to the storage module 204.

The analyzing module 202 is configured to analyze with a behavioral model 206, a multi-trace log file received from the storage module 204.

The behavioral model 206 is a representation in a formal language of the Byzantine Fault Tolerant consensus algorithm operated during an execution of the distributed system. The consensus algorithm is thus specified as a formal behavioural model using a sufficiently expressive modelling language.

The behavioral model 206 is composed of a plurality of local models (206-1, ..., 206-i, ..., 206-n), each local model being a formal representation of a respective specification of a node of the plurality n of nodes of the distributed system.

The plurality of local models are said to be communicating local models allowing transactions to occur between the models.

The local models may be non-deterministic i.e. from any given state there may be several distinct transitions which may be fired whether those correspond to the expression of outputs or inputs.

In a preferred embodiment, each local model 206-i defines: (1) a local buffer for storing messages send by other local models and that may be received, (2) a local memory which keeps track of the values of local variables, and (3) a local behavioral model which takes the form of a set of process algebraic terms which can be composed hierarchically.

Moreover, as the models are symbolic, the expression of many concrete communication actions can correspond to a same transition.

However, from any given state, there may be only a single transition which matches the observation of a given concrete communication action. For instance, let's one consider the reception by a lifeline *l* of a message m(#) which contains a certain integer value as payload (indicated by the #symbol).

Then, as shown with the two model examples of Annex B:
- The model (in fact a sub-model) on the left is not valid because there is no way to distinguish between the branches of the alternative (represented by the two-parts of the ***alt*** block) which have different consequences (i.e. in the top part, variable **x** is modified while in the bottom part, variable **y** is modified), using either the message label **m** or the data that it carries.
- The model on the right is valid because the reception of the incoming message ***m(#)*** can be interpreted unambiguously, as either branch of the alternative depending on the value of the integer data that it carries, thanks to the different conditions **$0>0** and **$0≤0** in each part of the alternative.

Each actor in a distributed system being expected to behave in a certain way according to the consensus algorithm specification, the specification 212 is modelled into a formal specification using an appropriate formal language 214 which shall be able to capture all aspects of complex BFT consensus-based distributed systems (such as cutting-edge PoS blockchains).

Some recommended features of such a language to represent a BFT consensus algorithm may be:
- Operators for sequencing, interleaving, non-deterministic alternatives and loops;
- Hierarchical composition of models which allow the dynamic creation and deletion of instances of a behaviour;
- Global and local (to each actor) typed variables;
- Handling of time with clocks;
- Guard conditions on variables and clocks which condition the evaluation of communication actions;
- Buffered communications between actors with various policies (such as FIFO, bags, etc).

In an embodiment, the language is a dedicated extension of the interaction language with Message Sequence Charts (MSC) and Sequence Diagrams (SD) as described in the articles previously cited. However, the skilled person would devise using any other language providing it follows the recommended features.

Moreover, the formal modelling step which may be conducted by an expert, may start either from an available non formal specification of the consensus algorithm or by analyzing an existing open-source implementation.

Advantageously, the formal modelling operation is a one-shot operation. Once the formal behavioral model 206 is available, the analyzing module 202 may be operated with the behavioral model for a multi-trace log file stored in the storage module 204, to provide in the output module 208, a set of actors which are identified as Byzantine.

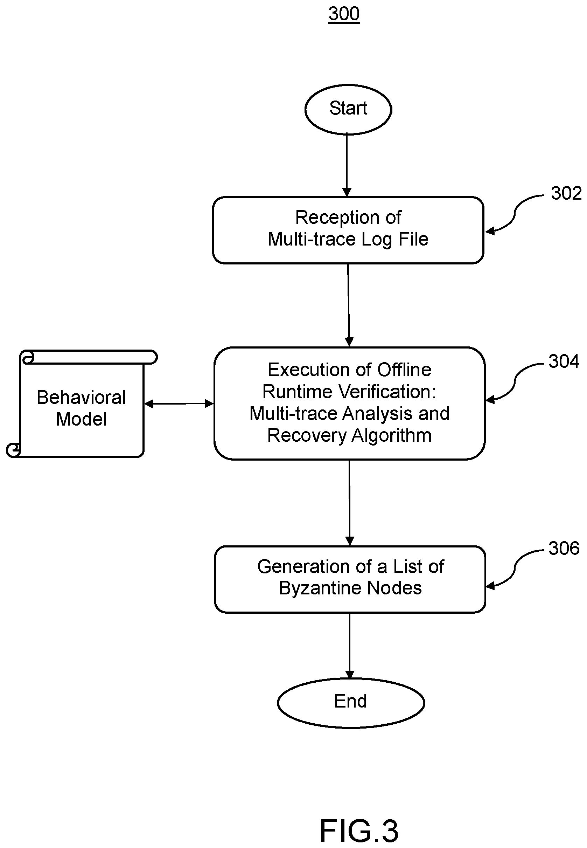

Going now to Fig. 3, a flow chart of the general process 300 for identifying Byzantine nodes within a distributed system is described, in accordance with an embodiment of the present invention.

As recited previously, the method is a computer implemented method for detecting Byzantine nodes in a consensus-based distributed system, the distributed system being composed of a plurality of nodes wherein agreement between nodes being reached by a Byzantine Fault Tolerant (BFT) consensus algorithm, each node being defined by at least a local distributed registry configured to collect in a local trace log file, all inputs and outputs of local transactions occurring at the respective node during an execution of the distributed system.

In a first step 302, the process allows receiving a multi-trace log file comprising all local trace log files collected during an execution period of the distributed system.

On a next step 304, the process allows executing an offline Runtime Verification (RV) algorithm on the multi-trace log file with a formal behavioral model (referenced as 206 on figure 2) that have been built to be a representation in a formal language of the BFT consensus algorithm.

The global behavioral model is composed of a plurality of communicating local models, each local model defining at least a local behavioral specification representing an expected behavior of one node among the plurality of nodes of the distributed system.

The execution of the offline runtime verification algorithm consists in re-enacting the communication actions that took place on each local trace of each corresponding node of the distributed system, during a real execution.

Re-enacting observed communication actions allows constructing a global scenario of which the multi-trace is an observation. The actors which violate their corresponding local specifications in this global scenario are Byzantine actors. The unicity of the global scenario which can be constructed is ensured by constraints on the input models which are authorized and by a policy on the order with which actions can be re-enacted.

The inventors have then determined the following specific rules for re-enacting communication actions, such that:
- If one or several inputs (i.e. reception of a message) is consumable on one or several local models (i.e. the corresponding local trace starts with a reception, the corresponding message is stored in the local buffer and a transition which matches this action can be fired in the local behavioural model), then any one of them can be fired and the process allows firing all of them. All those actions being inputs, they do not affect the states of the other local models. Hence, all inputs are fired in any order (it is to be noted that the order does not matter here so any one suffices, no need to explore interleavings).
- If there are no more inputs that can be re-enacted, the process allows selecting a single output and tries to fire it. Firing it requires that the corresponding local trace starts with the emission of a message and that a matching transition can be fired in the corresponding local behavioural model. Then:
- If the output can be successfully fired, the analysis may continue.
- If it is not the case, then it means that the corresponding actor deviated from its specification by emitting an unexpected message. In that case, the local model is identified as Byzantine. The process allows then activating a mechanism for recovering from the deviation, i.e. getting the global model to a state from which the analysis can continue.

The process allows then, when a deviation from an expected behavior is detected, to replace the local model generating the detected deviation by a local Byzantine model, and pursuing the execution of the runtime verification algorithm.

Advantageously, the local Byzantine model used to replace the local model generating the deviation, is generally a model that can accept any input and any output, thereby allowing the deviation to be replayed while pursuing the analysis, and still exploiting the local trace of the Byzantine actor to stimulate the other local models. This ensures the reconstruction of a complete global scenario which includes all the actors involved, whether they are Byzantine ones or correct ones.

In alternative embodiments, a local Byzantine model used to replace a local model may be defined as a model taking into account the type of deviation, such as for example a deviation known as "equivocation" (i.e. a Byzantine node can equivocate in that it may provide different values to its neighbors) or a deviation known as "amnesia" or "omission" (i.e. Byzantine node send a different value than the one previously sent).

The skilled person would adapt a local Byzantine model to a specific application.

Advantageously, by using a Byzantine model which is able to distinguish the type of deviation, the invention allows collecting proofs to demonstrate that a node is a faulty one, and then activating a blaming mechanism on that node. Therefore, the present invention allows improving the trustworthy of BFT consensus-based distributed system.

Finally, the execution step 304 (analyzing, replacing and pursuing steps) is continued until the whole multi-trace log file is analyzed.

On a next step 306, the process allows providing a set of, or creating a list of, all local models that are replaced by a Byzantine model during the execution of the runtime verification algorithm. The set or the list thereby designates the corresponding nodes of the distributed system as being Byzantine nodes.

Advantageously, the process allows constituting a proof package providing evidence of the byzantine behavior of each actor designated in the list. This allows latter, each actor to be held individually accountable for his behavior.

The approach of the present invention for analysing a multi-trace log file with respect to a formal behavioural model using the specific offline Runtime Verification (RV) algorithm of the present invention is particularly efficient compared to traditional offline RV techniques which enable a verification of a trace against a local specification for a given actor.

Even if with known RV techniques, when a deviation from a specification occurs in the trace, it is conclude that the actor is Byzantine, it would not have been easy for a skilled person to directly extend the traditional offline RV approach to distributed systems because this context requires a solution for two different problems.

A first problem is link to the fact that if traditional offline RV is applied to each local trace independently, all Byzantine behaviours cannot be detected. Indeed, each local trace may be correct when taken alone, but a coherent global scenario for the RV may not be compatible with all local traces. Advantageously, the present invention addresses this first problem by extending offline RV multi-trace analysis technique in re-enacting a global behaviour within an executable global specification which is coherent with all the local traces of a multi-trace log file.

The inventive characteristic of the multi-trace analysis of the present invention relies on the fact that the local models should be input complete, in order for each actor to be able to react to a Byzantine behaviour expressed by other actors. This means that from any state of a local model, any input should be authorized. Hence, this leads to the fact that deviations only occur when an actor expresses an output. The multi-trace analysis of the present invention allows that inputs and outputs are processed differently, such that in a global behavior model, when a communication medium in use for actor-to-actor communications is represented, an input can only occur if a corresponding output has already been processed and analysed. The innovative specific process to analyse the multi-trace log file follows the steps of first analysing in any order all the inputs that can be immediately processed, and then when no input can be processed, the steps of selecting a single output and analysing it. If this output is compliant with the corresponding actor's local specification, then the analysis continues. If the output is non-compliant (meaning a deviation has occurred) then the accountable actor is identified as being Byzantine, and the recovery mechanism is applied to allow pursuing the analysis.

A second problem to which the known RV techniques may not answer, relies on that during the execution of a global behavioural model, whenever a first deviation is observed (hence a first single actor is identified as Byzantine) the model goes out of its set of possible states. Hence it is not then possible to pursue the analysis. At most one Byzantine actor can be identified. The present invention addresses this second problem with the innovative recovery mechanism making the global model tolerant to deviations along with the innovative sequence of steps of the multi-trace analysis for identifying Byzantine actors.

The inventive characteristic of the recovery mechanism of the present invention allows that whenever a given actor expresses an unexpected event, it is not only identified as Byzantine but furthermore the corresponding local model is replaced by a Byzantine model which allows the deviation to occur. This allows replaying the deviation in the modified model, enabling the analysis to be pursued and, as a result allowing consecutive identification of not only a single one but identification of several Byzantine actors.

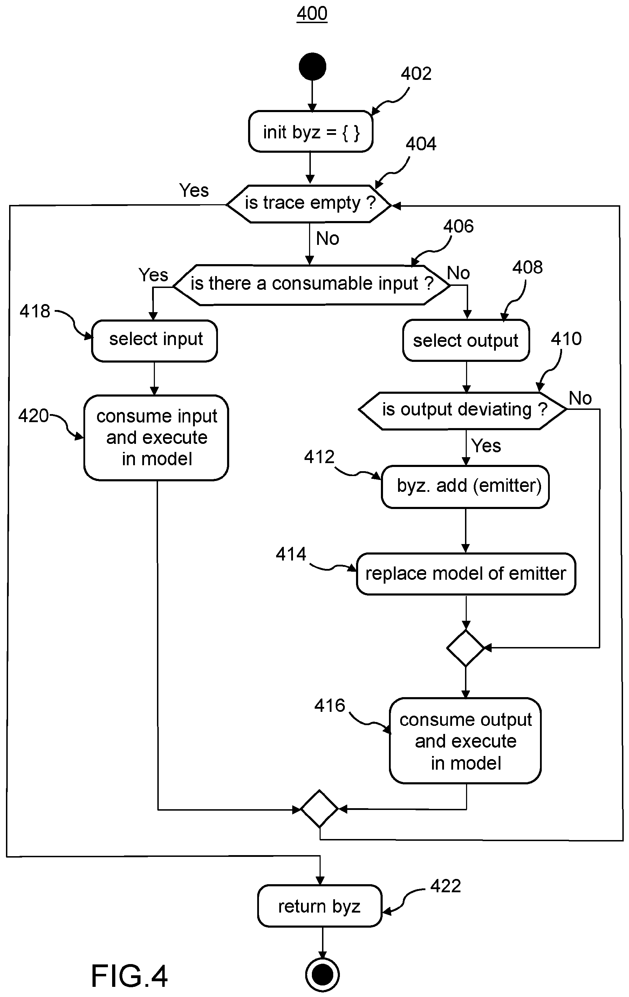

Going now to Fig. 4, a detailed flow chart of the steps for executing an offline runtime verification process 400 in accordance with an embodiment of the present invention is described.

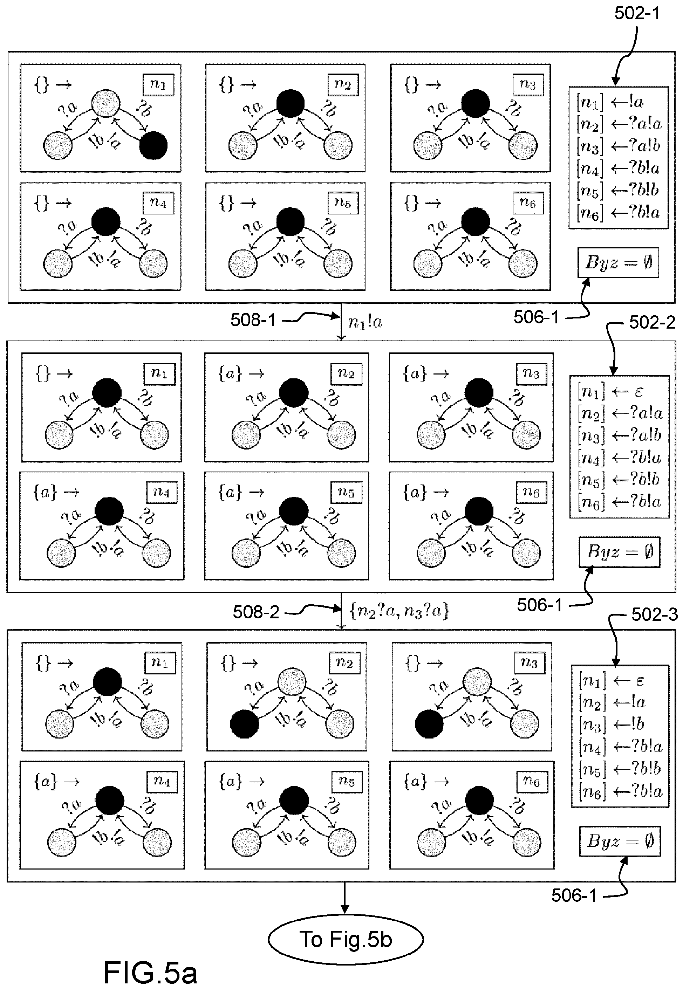

Figure 4 is further described in connection with Fig. 5a to Fig. 5c which exemplify the process for a distributed system comprising six actors or nodes. Each node is represented by a box labelled n1 to n6 which defines a local model for a respective node.

Each node specifies a labelled transition system represented in the example as a 3 states automaton (an automaton being a control mechanism designed to automatically follow a sequence of operations, or respond to predetermined instructions), where a black circle showing the current state of the automaton.

Each node is further associated with a local buffer denoted { } for storing messages received as inputs from other local models and a local memory for keeping track of values of local variables.

The scenario hypothesis for the example is that all message emissions (i.e. the outputs) are broadcasts to all the other actors. However, as a network may introduce delays or loose messages, a message which is emitted may not be necessarily received by all actors (even though it is intended to) or it may be received with a delay.

The behaviour which is expected by every local node is that whenever it receives a a message, it must immediately emit a ***b*** message, and whenever it receives a ***b*** message it must immediately emit a a message. Due to the presence of delays, messages can be received in any order, thus authorizing much possible global behaviour.

As shown on Fig. 5a to 5c, the notation ***!m*** and ***?m*** is used respectively for an emission (output) and a reception (input) of a message m.

The multi-trace log file received for performing the analysis is first illustrated by reference 502-1 on Fig. 5a and is composed of six local traces which are: !a for node n1; ***?a!a*** for node n2; ***?a!b*** for node n3; ***?b!a*** for node n4; ***?b!b*** for node n5 and ***?b!a*** for node n6.

The multi-trace log file is sequentially updated (502-1 to 502-6) at each step of the global scenario execution (508-1 to 508-8).

Going back to Fig. 4, the process 400 begins at step 402 by initializing a Byzantine buffer 506-1 allowing storing a reference of each local model identified as being in deviation as regard to its expected behavior. The Byzantine buffer is filled with a reference of the deviating local model each time a deviation is detected. As such, on the example, the content 506-2 of the Byzantine buffer stores a reference of node n2 after the execution step 508-3, and the content 506-3 of the Byzantine buffer stores a further reference of node n5 after the execution of step 508-7.

On a next step 404, the process allows determining if the multi-trace log file is empty or not.

If Yes, see 502-9, the process goes to step 422 to provide a list of all local models 506-9 replaced by a local Byzantine model during the overall execution of the runtime verification algorithm.

If No, the process continues with a step 406 of determining if there is a consumable input a or ***b*** in the buffer of any of the local model.

In case an input can be processed (Branch Yes), the process allows selecting 418 the input and on a next step 420 allows consuming the input and executing in the model.

In case no input can be processed (Branch No), the process allows selecting 408 an output. This is exemplified on Fig. 5a with a selection of output variable ***!a*** of node n1 which is used to execute step 508-1.

The process then allows determining on next step 410 if the output may be validly expressed by the local model or not, meaning step 410 allows determining if there is a deviation or not.

If the output is validly expressed by the local model, meaning there is no deviation, the process goes to a next step 416 to allow consuming the output and executing it in the model.

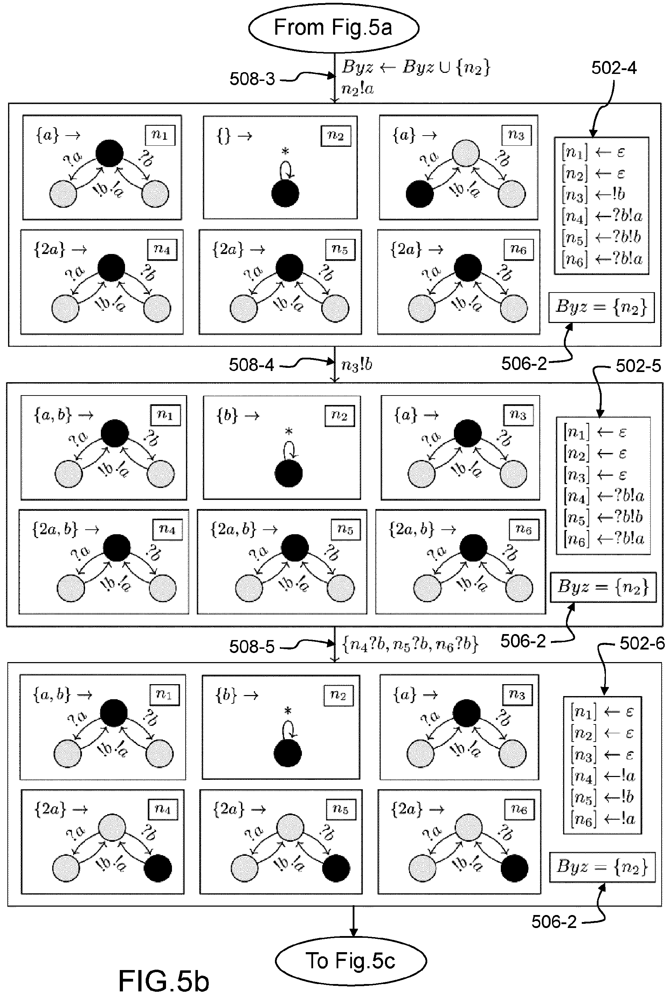

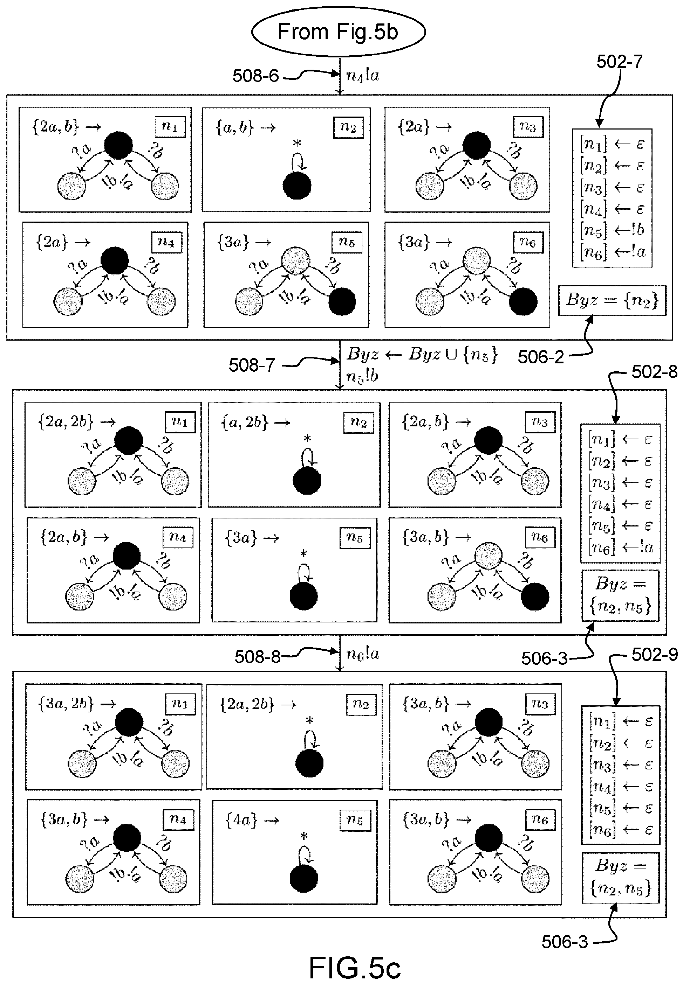

If the output is not validly expressed by the local model, meaning that a deviation is encountered, the process allows on a next step 412 to add in the Byzantine buffer, the reference of the local model providing the output variable which constitutes a deviation from the expected specification. This is exemplified on Fig. 5b with the execution of step 508-3 where the output !a of node n2 is not validly expressed by local model n2 and the Byzantine buffer 506-2 is thus filled with reference to node n2, and on Fig. 5c with the execution of step 508-7 where the output !b of node n5 is not validly expressed by local model n5 and the Byzantine buffer 506-3 is thus filled with reference to node n5 in addition to node n2.

After step 412, the process allows on step 414 activating the recovery mechanism by replacing the local model of the node generating the detected deviation, by a Byzantine model having the characteristics previously mentioned, and at least the characteristic of being able to process any type of input and output to permit on a next step 416 to consume the previously selected output and executing it in the model.

The process then goes back to step 404 until all local traces of the multi-trace log file have been processed. This is exemplified on Fig. 5c on last step 508-8 which consumes output !a of node n6, thereby processing the last node of the multi-trace log file 502-9.

The process ends on step 422 by providing in the Byzantine buffer, the references of all local models tagged during the execution as being deviating ones. This is exemplified on Fig. 5c with reference 506-9 of the final content of the Byzantine buffer.

The method has been described with reference to a simplified example for a better understanding of the concepts and principles of the invention. However, the example is not a limitation and may allow a skilled person to apply modifications and implement various embodiments.

The present invention may be a method and/or a computer program product at any possible technical detail level of integration. The computer program product may include a computer readable storage medium (or media) having non transitory computer readable program instructions thereon for causing a processor to carry out aspects of the present invention. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

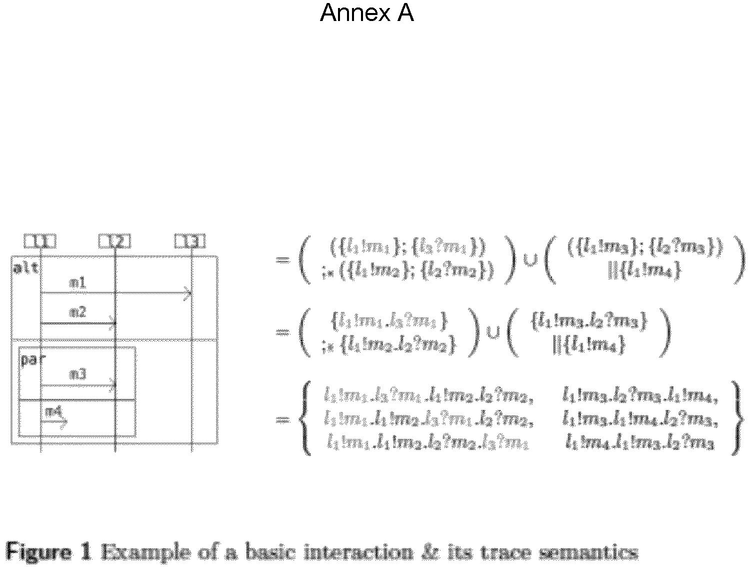

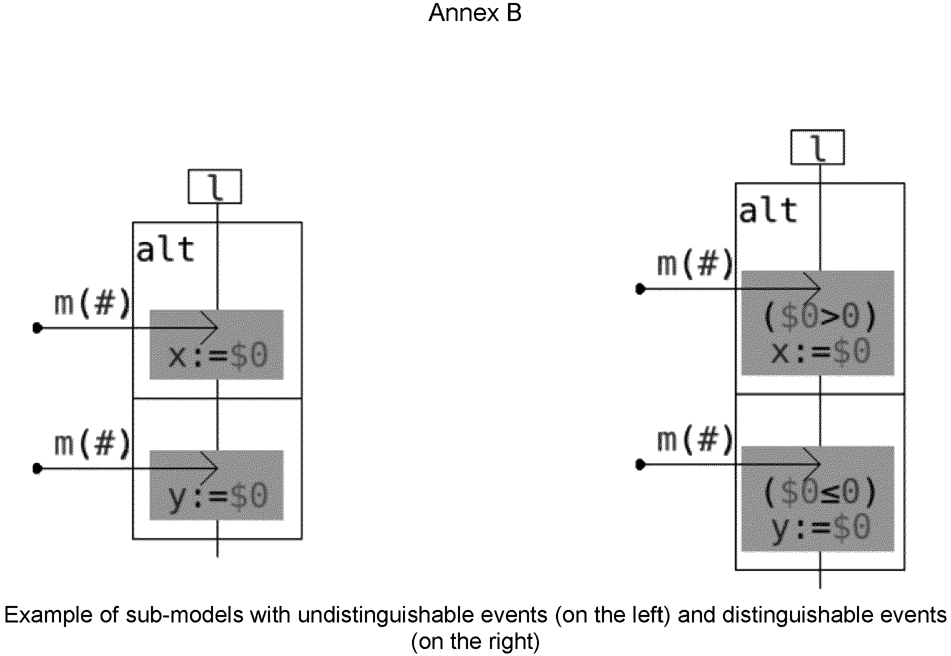

## Claims

1. A computer implemented method for detecting Byzantine nodes in a consensus-based distributed system, the distributed system being composed of a plurality of nodes wherein agreement between nodes being reached by a Byzantine Fault Tolerant (BFT) consensus algorithm, each node being defined by at least a local distributed registry configured to collect in a local trace log file all inputs and outputs of local transactions occurring at the respective node during an execution of the distributed system, the method comprising:
- receiving a multi-trace log file comprising all local trace log files collected during an execution period of the distributed system;
- executing an offline runtime verification algorithm on the multi-trace log file with a formal behavioral model, the formal behavioral model being a representation of the BFT consensus algorithm in a formal language, and being composed of a plurality of local models, each local model defining at least a local behavioral specification representing an expected behavior of one node of the plurality of nodes of the distributed system, the offline runtime verification algorithm comprising when a deviation from an expected behavior is detected:
- replacing a local model generating the detected deviation by a local Byzantine model, wherein the local Byzantine model allowing the detected deviation to occur;
- pursuing the execution of the offline runtime verification algorithm; and
- repeating the replacing and pursuing steps until the whole multi-trace log file is analyzed;
- creating a list of all local models replaced by a local Byzantine model during the execution of the offline runtime verification algorithm, the list thereby identifying the corresponding nodes of the distributed system as being Byzantine nodes.

2. The computer implemented method of claim 1 wherein each local model further defines a local buffer for storing messages received as inputs from other local models and a local memory for keeping track of values of local variables, and wherein the step of executing an offline runtime verification algorithm on the multi-trace log file comprises:
- consuming all inputs available in the local buffers of all local models by executing the respective local model;
and when no input is available for processing:
- selecting an output of one of the plurality of local models to determine compliance or not with the specification of the corresponding local model;
- if compliance, consuming the output by executing the corresponding local model, and selecting another output to determine compliance or not; or
- if non-compliance, identifying the local model as deviating, and executing the replacing step for the corresponding local model.

3. The computer implemented method of claim 1 or 2 wherein the step of creating a list of all local models replaced by a local Byzantine model, comprises storing in a Byzantine buffer a reference of the corresponding node of the distributed system for each replaced local model.

4. The computer implemented method of anyone of claims 1 to 3 wherein the replacing step consists in replacing the local model by a Byzantine model accepting any input and any output thereby allowing the detected deviation to be replayed.

5. The computer implemented method of anyone of claims 1 to 4 wherein the replacing step consists in replacing the local model by a Byzantine model taking into account the type of deviation detected.

6. The computer implemented method of anyone of claims 1 to 5 comprising a step of building a formal behavioral model representing a BFT consensus algorithm.

7. The computer implemented method of claim 6 wherein the formal behavioral model is built on the basis of an interaction language with Message Sequence Charts (MSC) and Sequence Diagrams (SD).

8. A method for providing accountability in distributed systems, comprising:
- executing the computer implemented method for detecting Byzantine nodes according to anyone of claims 1 to 7; and
- creating a proof package providing evidence of each deviating behavior detected during the execution step.

9. A non-transitory computer-readable storage medium coupled to one or more computers and configured with instructions executable by the one or more computers to perform the method of any one of claims 1 to 8.

10. A system for detecting Byzantine nodes in a consensus-based distributed system, the distributed system being composed of a plurality of nodes wherein agreement between nodes being reached by a Byzantine Fault Tolerant (BFT) consensus algorithm, each node being defined by at least a local distributed registry configured to collect in a local trace log file all inputs and outputs of local transactions occurring at the respective node during an execution of the distributed system, the system comprising :
one or more computers; and
one or more computer-readable memories coupled to the one or more computers and configured with instructions executable by the one or more computers to perform the method of any one of claims 1 to 8.

11. The system of claim 10 wherein the plurality of nodes of the distributed system is a plurality of distributed ledgers of a blockchain architecture.

## Patentansprüche

1. Computerimplementiertes Verfahren zum Erkennen Byzantinischer Knoten in einem konsensbasierten verteilten System, wobei das verteilte System aus einer Vielzahl von Knoten besteht, wobei eine Einigkeit zwischen den Knoten durch einen Byzantinischen fehlertoleranten (BFT) Konsensalgorithmus erreicht wird, wobei jeder Knoten durch mindestens ein lokales verteiltes Register definiert ist, das so konfiguriert ist, dass es in einer lokalen Trace-Protokolldatei alle Eingaben und Ausgaben lokaler Transaktionen sammelt, die während einer Ausführung des verteilten Systems an dem jeweiligen Knoten auftreten, wobei das Verfahren umfasst:
- Empfangen einer Multi-Trace-Protokolldatei, die alle lokalen Trace-Protokolldateien umfasst, die während einer Ausführungsperiode des verteilten Systems gesammelt werden;
- Ausführen eines Offline-Laufzeitüberprüfungsalgorithmus auf der Multi-Trace-Protokolldatei mit einem formalen Verhaltensmodell, wobei das formale Verhaltensmodell eine Darstellung des BFT-Konsensalgorithmus in einer formalen Sprache ist und aus einer Vielzahl von lokalen Modellen besteht, wobei jedes lokale Modell mindestens eine lokale Verhaltensspezifikation definiert, die ein erwartetes Verhalten eines Knotens der Vielzahl von Knoten des verteilten Systems darstellt, wobei der Offline-Laufzeitüberprüfungsalgorithmus Folgendes umfasst, wenn eine Abweichung von einem erwarteten Verhalten erkannt wird:
- Ersetzen eines lokalen Modells, das die erkannte Abweichung erzeugt, durch ein lokales Byzantinisches Modell, wobei das lokale Byzantinische Modell das Auftreten der erkannten Abweichung zulässt;
- Fortsetzen der Ausführung des Offline-Laufzeitüberprüfungsalgorithmus;
und
- Wiederholen der Schritte des Ersetzens und des Fortsetzens, bis die gesamte Multi-Trace-Protokolldatei analysiert ist;
- Erstellen einer Liste aller lokalen Modelle, die während der Ausführung des Offline-Laufzeitüberprüfungsalgorithmus durch ein lokales Byzantinisches Modell ersetzt werden, wobei die Liste dadurch die entsprechenden Knoten des verteilten Systems als Byzantinische Knoten identifiziert.

2. Computerimplementiertes Verfahren nach Anspruch 1, wobei jedes lokale Modell ferner einen lokalen Puffer zum Speichern von Nachrichten, die als Eingaben von anderen lokalen Modellen empfangen werden, und einen lokalen Speicher zum Verfolgen von Werten lokaler Variablen definiert, und wobei der Schritt des Ausführens eines Offline-Laufzeitüberprüfungsalgorithmus auf der Multi-Trace-Protokolldatei umfasst:
- Verbrauchen aller in den lokalen Puffern aller lokalen Modelle verfügbaren Eingaben durch Ausführen des jeweiligen lokalen Modells;
und wenn keine Eingabe zur Verarbeitung verfügbar ist:
- Auswählen einer Ausgabe eines der Vielzahl von lokalen Modellen, um eine Übereinstimmung oder eine Nichtübereinstimmung mit der Spezifikation des entsprechenden lokalen Modells zu bestimmen;
- bei Übereinstimmung, Verbrauchen der Ausgabe durch Ausführen des entsprechenden lokalen Modells, und Auswählen einer anderen Ausgabe, um eine Übereinstimmung oder eine Nichtübereinstimmung zu bestimmen; oder
- bei Nichtübereinstimmung, Identifizieren des lokalen Modells als abweichend, und Ausführen des Ersetzungsschritts für das entsprechende lokale Modell.

3. Computerimplementiertes Verfahren nach Anspruch 1 oder 2, wobei der Schritt des Erstellens einer Liste aller lokalen Modelle, die durch ein lokales Byzantinisches Modell ersetzt werden, das Speichern einer Referenz des entsprechenden Knotens des verteilten Systems für jedes ersetzte lokale Modell in einem Byzantinischen Puffer umfasst.

4. Computerimplementiertes Verfahren nach einem der Ansprüche 1 bis 3, wobei der Ersetzungsschritt darin besteht, das lokale Modell durch ein Byzantinisches Modell zu ersetzen, das jede Eingabe und jede Ausgabe akzeptiert, wodurch die erkannte Abweichung wiedergegeben werden kann.

5. Computerimplementierte Verfahren nach einem der Ansprüche 1 bis 4, wobei der Ersetzungsschritt darin besteht, das lokale Modell durch ein Byzantinisches Modell zu ersetzen, das die Art von erkannter Abweichung berücksichtigt.

6. Computerimplementiertes Verfahren nach einem der Ansprüche 1 bis 5, das einen Schritt zum Konstruieren eines formalen Verhaltensmodells umfasst, das einen BFT-Konsensalgorithmus darstellt.

7. Computerimplementiertes Verfahren nach Anspruch 6, wobei das formale Verhaltensmodell auf der Grundlage einer Interaktionssprache mit Nachrichten-Reihenfolge-Diagrammen (MSC) und Sequenzdiagrammen (SD) konstruiert wird.

8. Verfahren zum Bereitstellen von Verantwortlichkeit in verteilten Systemen, umfassend:
- Ausführen des computerimplementierten Verfahrens zum Erkennen Byzantinischer Knoten nach einem der Ansprüche 1 bis 7; und
- Erstellen eines Nachweis-Pakets, das einen Nachweis für jedes abweichende Verhalten bereitstellt, das während des Ausführungsschritts erkannt wird.

9. Nichtflüchtiges, computerlesbares Speichermedium, das mit einem oder mehreren Computern gekoppelt und mit Anweisungen konfiguriert ist, die von dem einen oder den mehreren Computern ausgeführt werden können, um das Verfahren nach einem der Ansprüche 1 bis 8 durchzuführen.

10. System zum Erkennen Byzantinischer Knoten in einem konsensbasierten verteilten System, wobei das verteilte System aus einer Vielzahl von Knoten besteht, wobei eine Einigkeit zwischen Knoten durch einen Byzantinischen fehlertoleranten (BFT) Konsensalgorithmus erreicht wird, wobei jeder Knoten durch mindestens ein lokales verteiltes Register definiert ist, das so konfiguriert ist, dass es in einer lokalen Trace-Protokolldatei alle Eingaben und Ausgaben lokaler Transaktionen sammelt, die während einer Ausführung des verteilten Systems an dem jeweiligen Knoten auftreten, wobei das System umfasst:
einen oder mehrere Computer; und
einen oder mehrere computerlesbare Speicher, die mit dem einen oder den mehreren Computern gekoppelt und mit Anweisungen konfiguriert sind, die von dem einen oder den mehreren Computern ausgeführt werden können, um das Verfahren nach einem der Ansprüche 1 bis 8 durchzuführen.

11. System nach Anspruch 10, wobei die Vielzahl von Knoten des verteilten Systems eine Vielzahl von verteilten Ledgern einer Blockchain-Architektur ist.

## Revendications

1. Procédé mis en œuvre sur ordinateur pour détecter des nœuds byzantins dans un système distribué basé sur un consensus, le système distribué étant composé d'une pluralité de nœuds dans laquelle un accord entre des nœuds est atteint par un algorithme de consensus tolérant aux erreurs byzantines (BFT), chaque nœud étant défini par au moins un registre distribué local configuré pour collecter dans un fichier journal de trace local toutes les entrées et sorties de transactions locales se produisant au nœud respectif pendant une exécution du système distribué, le procédé comprenant :
- la réception d'un fichier journal multi-traces comprenant tous les fichiers journaux de trace locaux collectés pendant une période d'exécution du système distribué ;
- l'exécution d'un algorithme de vérification d'exécution hors ligne sur le fichier journal multi-traces avec un modèle comportemental formel, le modèle comportemental formel étant une représentation de l'algorithme de consensus BFT dans un langage formel, et étant composé d'une pluralité de modèles locaux, chaque modèle local définissant au moins une spécification comportementale locale représentant un comportement attendu d'un nœud de la pluralité de nœuds du système distribué, l'algorithme de vérification d'exécution hors ligne comprenant, lorsqu'une déviation par rapport à un comportement attendu est détectée :
- le remplacement d'un modèle local générant la déviation détectée par un modèle byzantin local, dans lequel le modèle byzantin local permet à la déviation détectée de se produire ;
- la poursuite de l'exécution de l'algorithme de vérification d'exécution hors ligne ; et
- la répétition des étapes du remplacement et de la poursuite jusqu'à ce que l'ensemble du fichier journal multi-traces soit analysé ;
- la création d'une liste de tous les modèles locaux remplacés par un modèle byzantin local pendant l'exécution de l'algorithme de vérification d'exécution hors ligne, cette liste identifiant ainsi les nœuds correspondants du système distribué comme étant des nœuds byzantins.

2. Procédé mis en œuvre sur ordinateur selon la revendication 1, dans lequel chaque modèle local définit en outre un tampon locale pour stocker des messages reçus en tant qu'entrées provenant d'autres modèles locaux et une mémoire locale pour suivre des valeurs de variables locales, et dans lequel l'étape d'exécution d'un algorithme de vérification d'exécution hors ligne sur le fichier journal multi-traces comprend :
- la consommation de toutes les entrées disponibles dans les tampons locaux de tous les modèles locaux en exécutant le modèle local respectif ;
et lorsqu'aucune entrée n'est disponible pour le traitement :
- la sélection d'une sortie d'un parmi la pluralité de modèles locaux pour déterminer la conformité ou non avec la spécification du modèle local correspondant ;
- si conformité, la consommation de la sortie en exécutant le modèle local correspondant, et la sélection d'une autre sortie pour déterminer la conformité ou non ; ou
- si non-conformité, l'identification du modèle local comme déviant et l'exécution de l'étape de remplacement pour le modèle local correspondant.

3. Procédé mis en œuvre sur ordinateur selon la revendication 1 ou 2, dans lequel l'étape de création d'une liste de tous les modèles locaux remplacés par un modèle byzantin local comprend le stockage dans un tampon byzantin d'une référence du nœud correspondant du système distribué pour chaque modèle local remplacé.

4. Procédé mis en œuvre sur ordinateur selon l'une quelconque des revendications 1 à 3, dans lequel l'étape de remplacement consiste à remplacer le modèle local par un modèle byzantin acceptant une quelconque entrée et une quelconque sortie, permettant ainsi de reproduire la déviation détectée.

5. Procédé mis en œuvre sur ordinateur selon l'une quelconque des revendications 1 à 4, dans lequel l'étape de remplacement consiste à remplacer le modèle local par un modèle byzantin tenant compte du type de déviation détectée.

6. Procédé mis en œuvre sur ordinateur selon l'une quelconque des revendications 1 à 5, comprenant une étape de construction d'un modèle comportemental formel représentant un algorithme de consensus BFT.

7. Procédé mis en œuvre sur ordinateur selon la revendication 6, dans lequel le modèle comportemental formel est construit sur la base d'un langage d'interaction avec des diagrammes de séquence de messages (MSC) et des diagrammes de séquence (SD).

8. Procédé pour assurer l'imputabilité dans des systèmes distribués, comprenant :
- l'exécution du procédé mis en œuvre sur ordinateur pour détecter des nœuds byzantins selon l'une quelconque des revendications 1 à 7 ; et
- la création d'un ensemble de preuves fournissant des preuves de chaque comportement déviant détecté pendant l'étape d'exécution.

9. Support de stockage non transitoire lisible par ordinateur, couplé à un ou plusieurs ordinateurs et configuré avec des instructions exécutables par les un ou plusieurs ordinateurs pour mettre en œuvre le procédé selon l'une quelconque des revendications 1 à 8.

10. Système pour détecter des nœuds byzantins dans un système distribué basé sur un consensus, le système distribué étant composé d'une pluralité de nœuds dans laquelle un accord entre des nœuds est atteint par un algorithme de consensus tolérant aux erreurs byzantines (BFT), chaque nœud étant défini par au moins un registre distribué local configuré pour collecter dans un fichier journal de trace local toutes les entrées et sorties de transactions locales se produisant au nœud respectif pendant une exécution du système distribué, le système comprenant :
un ou plusieurs ordinateurs ; et
une ou plusieurs mémoires lisibles par ordinateur, couplées aux un ou plusieurs ordinateurs et configurée avec des instructions exécutables par les un ou plusieurs ordinateurs pour mettre en œuvre le procédé selon l'une quelconque des revendications 1 à 8.

11. Système selon la revendication 10, dans lequel la pluralité de nœuds du système distribué est une pluralité de registres distribués d'une architecture blockchain.
